# EUROPÄISCHE PATENTSCHRIFT

(11) **EP 4 104 652 B1**
(45) Veröffentlichungstag und Bekanntmachung des Hinweises auf die Patenterteilung: **16.10.2024**
(21) Anmeldenummer: 22177711.3
(22) Anmeldetag: 08.06.2022
(51) Int. Cl.: A01B 3/36, A01B 3/44, A01B 3/46, A01B 3/42

(54) **AUFSATTELDREHPFLUG MIT VERBESSERTEM DREHWERK**
SEMI-MOUNTED PLOUGH WITH IMPROVED ROTARY MECHANISM
CHARRUE SEMI-PORTÉE BRABANT POURVUE DE MÉCANISME DE ROTATION AMÉLIORÉ

(30) Priorität: 14.06.2021 DE 102021115252
(43) Veröffentlichungstag der Anmeldung: 21.12.2022
(73) Patentinhaber: Amazonen-Werke H. Dreyer SE & Co. KG, 49205 Hasbergen (DE)
(72) Erfinder: WILKEN, Martin, 26131 Oldenburg (DE); WARNECKE, Christoph, 49152 Bad Essen (DE); REHNEN, Pascal, 49328 Melle (DE)

(56) Entgegenhaltungen:
- EP-A2- 0 019 275
- DE-A1- 102018 125 425
- DE-T2- 69 306 135

## Beschreibung

Die Erfindung betrifft einen Aufsatteldrehpflug gemäß dem Oberbegriff des Patentanspruches 1.

Derartige Aufsatteldrehpflüge mit einem Drehwerk sind in der Praxis wohlbekannt. Mittels des Drehwerks ist ein zwei Pflugkörperreihen gegenüberliegend tragender Pflugrahmen um eine liegende Wendeachse drehbar, so dass wahlweise die eine Pflugkörperreihe arbeitet oder die gegenüberliegende Pflugkörperreihe in den Boden eintauchen kann. Um den Pflugrahmen um etwa 180 Grad um die Wendeachse in die jeweilige Arbeitsstellung zu drehen, umfasst das Drehwerk zumindest einen ersten Hydraulikzylinder und einen zweiten Hydraulikzylinder. Die Hydraulikzylinder wirken bei der Drehung des Pflugrahmens einfachwirkend wenngleich sie doppeltwirkend ausgeführt sein können. Die Hydraulikzylinder sind also derart einfachwirkend am Drehwerk angeordnet, dass zur Drehung des Pflugrahmens aus einer Arbeitsstellung in die gegenüberliegende Arbeitsstellung zunächst der erste Hydraulikzylinder mit dem Drehwerk in Wirkverbindung steht, um den Pflugrahmen aus der Arbeitsstellung in eine Zwischenstellung, in der der Pflugrahmen zumindest annährend oberhalb der Wendeachse angeordnet ist, zu verbringen wobei der zweite Hydraulikzylinder außer Wirkverbindung mit dem Drehwerk steht. Anschließend steht der zweite Hydraulikzylinder mit dem Drehwerk in Wirkverbindung, um den Pflugrahmen aus der Zwischenstellung in die gegenüberliegende Arbeitsstellung abzusenken wobei der erste Hydraulikzylinder außer Wirkverbindung mit dem Drehwerk steht. Um den Pflugrahmen aus dieser gegenüberliegenden Arbeitsstellung in umgekehrter Reihenfolge wieder in die erste Arbeitsstellung zu verbringen, steht zuerst der zweite Hydraulikzylinder und dann der erste Hydraulikzylinder mit dem Drehwerk in Wirkverbindung. Um den Drehvorgang ruckfrei zu gestalten, ist regelmäßig vorgesehen, dass der Hubweg der Hydraulikzylinder um den Pflugrahmen aus der Zwischenstellung in die Arbeitsstellung abzusenken hydraulisch gedämpft ist. Bei der hydraulischen Dämpfung dieses Hubweges wird der, insbesondere abfließende, Volumenstrom gedrosselt, so dass der Hydraulikzylinder mit reduzierter Geschwindigkeit verfährt.

Bei bisherigen Aufsatteldrehpflügen mit derartigem Drehwerk ist das Problem, dass der gedämpfte Hubweg der Hydraulikzylinder um den Pflugrahmen aus der Zwischenstellung in die Arbeitsstellung abzusenken ebenfalls dem Hubweg entspricht um den Pflugrahmen aus der Arbeitsstellung in die Zwischenstellung zu verbringen. Die Dämpfung wirkt also bisher für den gesamten Hubweg unabhängig davon in welcher Richtung dieser ausgeführt wird. Der Wechsel von einer Arbeitsstellung in die Andere, also der Drehvorgang mittels des Drehwerks, verlängert sich somit aufgrund der bidirektionalen Dämpfung.

Ein weiterer Aufsatteldrehpflug ist in DE 693 06 135 T2 offenbart. Dieser weist einen Pflugrahmen, eine liegende Wendeachse und ein Drehwerk auf, wobei der Pflugrahmen mittels zweier Hydraulikzylinder aus der einen Arbeitsstellung in die gegenüberliegende Arbeitsstellung verbringbar ist.

In EP 0 019 275 A2 ist ein Pflug offenbart, der lediglich einen einzelnen Zylinder für die Wendung aus der einen Arbeitsstellung in die gegenüberliegende Arbeitsstellung vorsieht.

Die Aufgabe der vorliegenden Erfindung besteht darin einen Aufsatteldrehpflug mit einem verbesserten Drehwerk zu schaffen, welches insbesondere die im Stand der Technik bekannten Nachteile behebt. Insbesondere soll der Drehvorgang mittels des Drehwerks beschleunigt werden ohne den Aufsatteldrehpflug zusätzlich zu belasten.

Diese Aufgabe wird erfindungsgemäß durch einen Aufsatteldrehpflug mit den Merkmalen des Anspruchs 1 gelöst. Es ist vorgesehen, dass der Aufsatteldrehpflug zumindest einen Bypass umfasst, wobei mittels des Bypasses der Hubweg der Hydraulikzylinder um den Pflugrahmen aus der Arbeitsstellung in die Zwischenstellung zu verbringen ungedämpft ist. Mittels des Bypasses ist die Drosselung des Volumenstroms zumindest für den Hubweg der Hydraulikzylinder in Richtung aus der Arbeitsstellung in die Zwischenstellung überbrückt, so dass dieser Hubweg mit gesteigerter Geschwindigkeit ausführbar ist. "Ungedämpft", das heißt also, dass der Volumenstrom für diesen Hubweg bzw. in dieser Richtung nicht über die Dämpfung strömen muss.

Die Erfindung macht sich die Erkenntnis zunutze, dass der jeweilige Hydraulikzylinder in dieser ersten Hälfte des Drehvorgangs gegen das Eigengewicht der Pflugrahmens arbeitet. Dieser Hubweg kann somit mit gesteigerter Geschwindigkeit durchfahren werden ohne Stöße in das Drehwerk und/oder den Pflugrahmen einzuleiten. Während der zweiten Hälfte des Drehvorgangs ist der Hubweg hingegen gedämpft, da hier das Eigengewicht des Pflugrahmens auf dem Hydraulikzylinder lastet. Der Drehvorgang wird folglich während der ersten Hälfte beschleunigt ohne zusätzliche Materialbelastung.

Der erfindungsgemäße Aufsatteldrehpflug ist vorteilhaft dadurch weitergebildet, dass der erste Hydraulikzylinder und der zweite Hydraulikzylinder jeweils eine Endlagendämpfung umfassen zur Dämpfung des Hubweges um den Pflugrahmen aus der Zwischenstellung in die Arbeitsstellung abzusenken, wobei der Bypass dazu eingerichtet ist, unter Druck stehendes Hydraulikfluid parallel zu der jeweiligen Endlagendämpfung in zumindest eine Kammer der Hydraulikzylinder zu leiten. Durch Einleiten des Hydraulikfluids in die Kammer eines Hydraulikzylinders parallel zur Endlagendämpfung kann die Dämpfung folglich in zumindest einer Richtung, nämlich in Einströmrichtung, überbrückt werden, während abfließendes Hydraulikfluid mittels der Endlagendämpfung gedrosselt wird. Bei Ausführung der Hydraulikzylinder mit Endlagendämpfung kann die Dämpfung somit in einer Richtung mittels des Bypasses aufgehoben werden, nämlich für den Hubweg aus der Arbeitsstellung in die Zwischenstellung.

In einer weiteren besonders vorteilhaften Weiterbildung des erfindungsgemäßen Aufsatteldrehpflugs ist vorgesehen, dass der erste Hydraulikzylinder und der zweite Hydraulikzylinder jeweils einen Bypass umfassen, welcher parallel zu der Endlagendämpfung verschaltet ist, wobei der Bypass jeweils ein Rückschlagventil aufweist. Durch die Verwendung eines Rückschlagventils kann in besonders zweckmäßiger Weise sichergestellt werden, dass das Hydraulikfluid in einer Richtung über die Endlagendämpfung strömt und in entgegengesetzter Richtung parallel zur Dämpfung über den Bypass direkt in die Kammer des Hydraulikzylinders einströmen kann.

Die vorstehende Ausführungsform des erfindungsgemäßen Aufsatteldrehpfluges ist vorteilhaft dadurch weitergebildet, dass das Rückschlagventil dazu eingerichtet ist den Bypass während des Hubweges, um den Pflugrahmen aus der Zwischenstellung in die Arbeitsstellung abzusenken, zu sperren und den Bypass während des Hubweges, um den Pflugrahmen aus der Arbeitsstellung in die Zwischenstellung zu verbringen, freizugeben.

In einer weiteren vorteilhaften Weiterbildung des erfindungsgemäßen Aufsatteldrehpfluges ist die Endlagendämpfung mehrstufig, insbesondere dreistufig, ausgeführt.

Weitere Einzelheiten der Erfindung sind der Beispielsbeschreibung und den Zeichnungen zu entnehmen. Die Zeichnungen zeigen
- Fig.1: ein Ausführungsbeispiel des erfindungsgemäßen Aufsatteldrehpfluges mit einem Drehwerk in perspektivischer Ansicht von schräg hinten,
- Fig.2: das Drehwerk mit zwei Hydraulikzylindern in Detailansicht von schräg vorne,
- Fig.3: ein Hydraulikzylinder des Drehwerks auf einem ersten Hubweg in einer ersten Hubstellung in Schnittansicht,
- Fig.4: der Hydraulikzylinder in einer zweiten Hubstellung in Schnittansicht,
- Fig.5: der Hydraulikzylinder in einer dritten Hubstellung in Schnittansicht, und
- Fig.6: der Hydraulikzylinder auf einem zweiten Hubweg in der dritten Hubstellung in Schnittansicht.

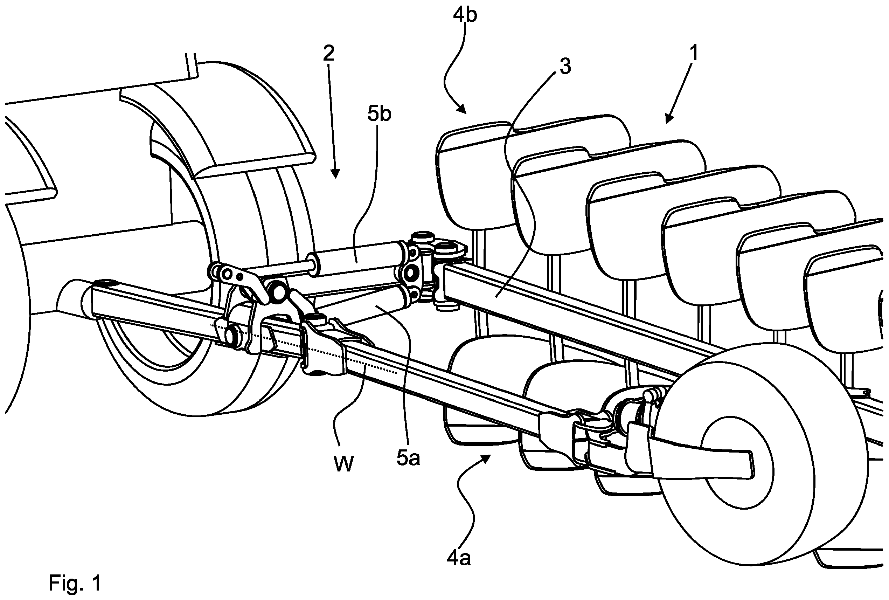

Ein Aufsatteldrehpflug 1 mit einem Drehwerk 2 an seinem vorderen Ende ist in Fig.1 in einer Arbeitsstellung in perspektivischer Ansicht von schräg hinten zu sehen. Der Aufsatteldrehpflug 1 umfasst einen Pflugrahmen 3, der zwei gegenüberliegend angeordnete Pflugkörperreihen 4a, 4b trägt. In der gezeigten Arbeitsstellung wird der Boden mithilfe der Pflugkörperreihe 4a bearbeitet. Mittels des Drehwerks 2 ist der Pflugrahmen 3 um eine liegende, zumindest annährend in Fahrtrichtung weisende Wendeachse W um zumindest annährend 180 Grad drehbar, so dass die gegenüberliegende Arbeitsstellung, in der die Pflugkörperreihe 4b die Bodenbearbeitung verrichtet, erreicht wird. Das Drehwerk 2 umfasst hierzu zwei Hydraulikzylinder 5a, 5b.

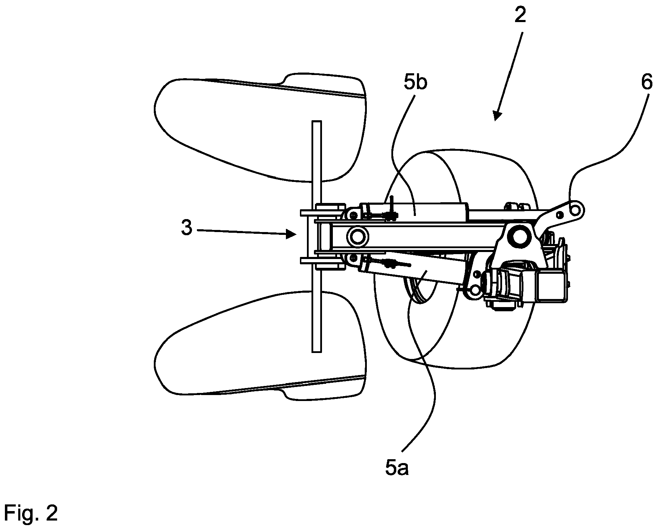

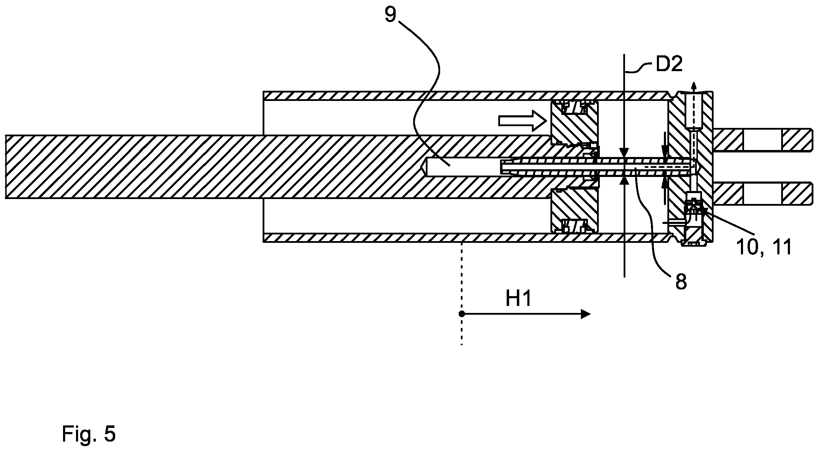

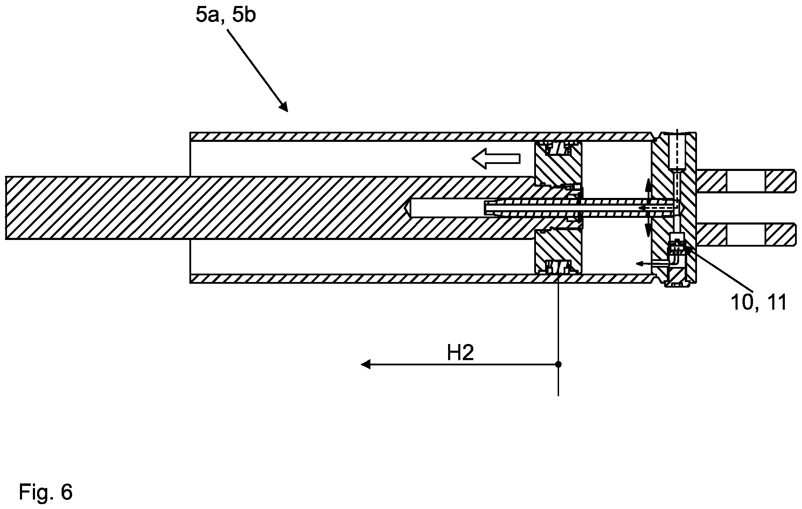

Das Drehwerk 2 ist in Fig.2 in Detailansicht von schräg vorne gezeigt. Die Hydraulikzylinder 5a, 5b sind doppeltwirkend ausgeführt aber einfachwirkend am Drehwerk 2 angeordnet. Eine in einem beschränkten Winkelbereich um die Wendeachse W schwenkbare Wippe 6 sorgt dafür, dass immer nur einer der Hydraulikzylinder 5a, 5b mit dem Drehwerk 2 in Wirkverbindung steht, wie nachfolgend erläutert wird. Um den Pflugrahmen 3 aus der in Fig.1 gezeigten Arbeitsstellung in die gegenüberliegende Arbeitsstellung zu drehen, steht zunächst der Hydraulikzylinder 5a mit dem Drehwerk 2 in Wirkverbindung. Der Hydraulikzylinder 5a entspricht also dem "ersten Hydraulikzylinder" im Sinne der Patentansprüche. Der mit dem Drehwerk 2 zunächst in Wirkverbindung stehende Hydraulikzylinder 5a befindet sich in einer dritten Hubstellung, gezeigt in den Fig.5 und 6, in welcher er seine minimale Länge aufweist. Um den Pflugrahmen 3 aus der Arbeitsstellung in eine Zwischenstellung, in der der Pflugrahmen 3 zumindest annährend oberhalb der Wendeachse W angeordnet ist, zu verbringen, wird der Hydraulikzylinder 5a auf einem zweiten Hubweg H2, angedeutet in Fig.6, ausgefahren. Der Hydraulikzylinder 5b steht hierbei außer Wirkverbindung mit dem Drehwerk 2. Der Hydraulikzylinder 5b entspricht also dem "zweiten Hydraulikzylinder" im Sinne der Patentansprüche.

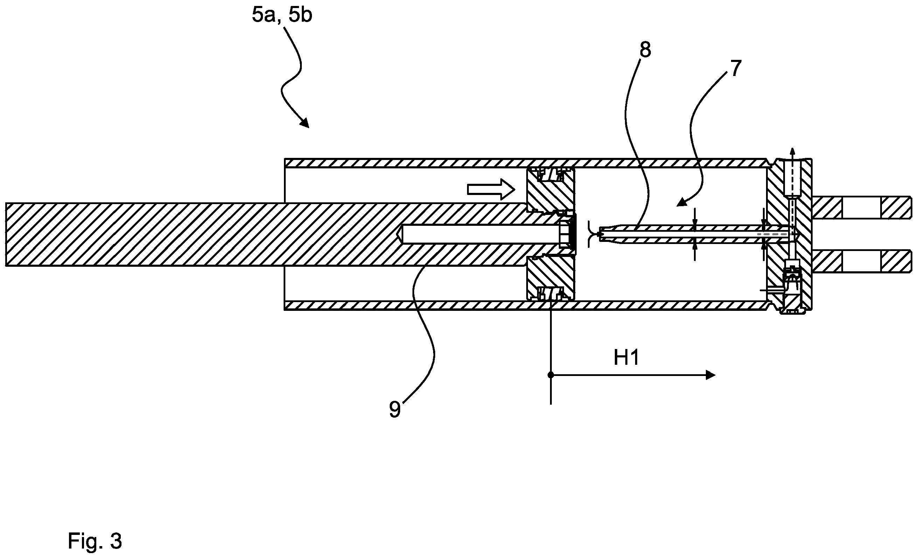

Anschließend steht der Hydraulikzylinder 5b mit dem Drehwerk 2 in Wirkverbindung, um den Pflugrahmen 3 aus der Zwischenstellung in die gegenüberliegende Arbeitsstellung abzusenken. Der Hydraulikzylinder 5b befindet sich in der Zwischenposition in einer ersten Hubstellung, gezeigt in Fig.3, in welcher er seine maximale Länge aufweist. Um den Pflugrahmen 3 aus der Zwischenstellung in die gegenüberliegende Arbeitsstellung abzusenken, wird der Hydraulikzylinder 5b auf einem ersten Hubweg H1, angedeutet in den Fig.3 bis 5, eingefahren. Auf diesem Hubweg H1 lastet das Gewicht des Pflugrahmens 3 mit den Pflugkörperreihen 4a, 4b zumindest teilweise auf dem Hydraulikzylinder 5b, während der Hydraulikzylinder 5a außer Wirkverbindung mit dem Drehwerk 2 steht.

Zur Drehung des Pflugrahmens 3 in umgekehrter Richtung von der Arbeitsstellung der Pflugkörperreihe 4b zur Arbeitsstellung der Pflugkörperreihe 4a steht dementsprechend zuerst der Hydraulikzylinder 5b in Wirkverbindung mit dem Drehwerk 2 und wird aus seiner dritten Hubstellung minimaler Länge auf dem zweiten Hubweg H2 in die erste Hubstellung maximaler Länger verfahren. Anschließend steht der Hydraulikzylinder 5a mit dem Drehwerk 2 in Wirkverbindung und wird aus der ersten Hubstellung auf dem ersten Hubweg H1 in die dritte Hubstellung minimaler Länge verfahren, um den Pflugrahmen 3 abzusenken.

Um eine ruckartige Belastung der an der Drehung beteiligten Komponenten zu vermeiden, ist vorgesehen, dass der Hubweg H1 der Hydraulikzylinder 5a, 5b um den Pflugrahmen 3 aus der Zwischenstellung in die Arbeitsstellung abzusenken hydraulisch gedämpft ist. Die Hydraulikzylinder 5a, 5b weisen eine dreistufige Endlagendämpfung 7 auf, wie anhand der Fig.3 bis 6 näher erläutert werden soll.

In der in Fig.3 gezeigten ersten Hubstellung der Hydraulikzylinder 5a, 5b wird die Ringkammerseite mit unter Druck stehendem Hydraulikfluid beaufschlagt, so dass der Kolben sich auf dem ersten Hubweg H1 in Bewegung setzt. Das in der Kolbenkammer befindliche Hydraulikfluid wird verdrängt durch einen Dorn 8 der Endlagendämpfung 7. Der Dorn 8 weist eine Bohrung auf durch die das verdrängte Hydraulikfluid gedrosselt wird, so dass der Hubweg H1 gedämpft ist.

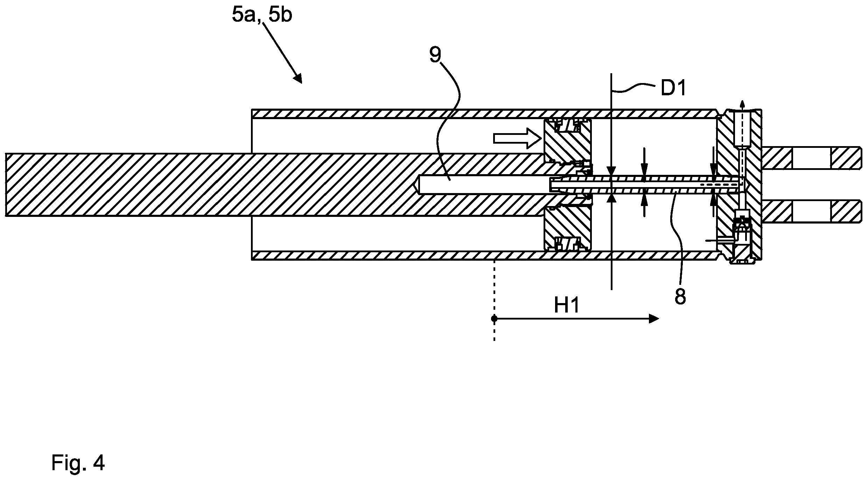

Mit zunehmendem Hubweg H1, gezeigt für die zweite Hubstellung in Fig.4, beginnt der Dorn 8 in eine Kolbenbohrung 9 einzutauchen, wodurch der freie Querschnitt für das verdrängte Hydraulikfluid weiter reduziert wird. Der Dorn 8 weist in diesem Bereich einen ersten Durchmesser D1 auf. Die Endlagendämpfung 7 ist somit mit einer zusätzlichen Dämpfungsstufe geschaffen.

Mit weiter zunehmendem Hubweg H1 taucht ein Bereich des Dorns 8 in die Kolbenbohrung 9 ein der einen zweiten Durchmesser D2 aufweist, wobei der zweite Durchmesser D2 größer ist als der erste Durchmesser D1. Der Volumenstrom für das aus der Kolbenkammer verdrängte Hydraulikfluid wird somit weiter gedrosselt, so dass die Endlagendämpfung 7 mit einer dritten Dämpfungsstufe geschaffen ist.

Damit für den zweiten Hubweg H2 aus der dritten Hubstellung, gezeigt in Fig.6, zurück in die erste Hubstellung gemäß Fig.3 das unter Druck stehende Hydraulikfluid nicht in gedämpfter Weise über die Endlagendämpfung 7 strömen braucht, ist ein Bypass 10 vorgesehen. Der Bypass 10 sorgt dafür, dass der Hubweg H2 der Hydraulikzylinder 5a, 5b um den Pflugrahmen 3 aus der Arbeitsstellung in die Zwischenstellung zu verbringen ungedämpft ist.

Der Bypass 10 ist parallel zu der Endlagendämpfung 7 mit seinem Dorn 8 verschaltet, so dass er dazu eingerichtet ist, unter Druck stehendes Hydraulikfluid parallel zu der jeweiligen Endlagendämpfung 7 in die Kolbenkammer der Hydraulikzylinder 5a, 5b zu leiten. Jeder der Hydraulikzylinder 5a, 5b weist an seinem Bypass 10 hierzu ein Rückschlagventil 11 auf.

Das Rückschlagventil 11 ist dazu eingerichtet, den Bypass 10 während des Hubweges H1, um den Pflugrahmen 3 aus der Zwischenstellung in die Arbeitsstellung abzusenken, zu sperren, so dass das verdrängte Hydraulikfluid über die Endlagendämpfung 7 strömt, und den Bypass 10 während des Hubweges H2, um den Pflugrahmen 3 aus der Arbeitsstellung in die Zwischenstellung zu verbringen, freizugeben, so dass die Endlagendämpfung 7 überbrückt wird und das unter Druck stehende Hydraulikfluid direkt in die Kolbenkammer strömen kann. Der Hubweg H2 ist somit ungedämpft, weil das einströmende Hydraulikfluid die drosselnde Endlagendämpfung 7 über den Bypass 10 umgehen kann.

### Bezugszeichenliste

- 1: Aufsatteldrehpflug
- 2: Drehwerk
- 3: Pflugrahmen
- 4a, 4b: Pflugkörperreihe
- W: Wendeachse
- 5a, 5b: Hydraulikzylinder
- 6: Wippe
- 7: Endlagendämpfung
- 8: Dorn
- 9: Kolbenbohrung
- D1 ,D2: Durchmesser
- 10: Bypass
- 11: Rückschlagventil

## Patentansprüche

1. Aufsatteldrehpflug (1) mit einem Pflugrahmen (3), einer liegenden Wendeachse (W) und einem Drehwerk (2) mittels dem der zwei Pflugkörperreihen (4a, 4b) gegenüberliegend tragende Pflugrahmen (3) um die Wendeachse (W) drehbar ist, wobei das Drehwerk (2) zur Drehung des Pflugrahmens (3) um die Wendeachse (W) in eine jeweilige Arbeitsstellung zumindest einen ersten Hydraulikzylinder (5a) und einen zweiten Hydraulikzylinder (5b) aufweist, wobei die Hydraulikzylinder (5a, 5b) derart einfachwirkend am Drehwerk (2) angeordnet sind, dass zur Drehung des Pflugrahmens (3) aus einer Arbeitsstellung in die gegenüberliegende Arbeitsstellung zunächst der erste Hydraulikzylinder (5a) mit dem Drehwerk (2) in Wirkverbindung steht, um den Pflugrahmen (3) aus der Arbeitsstellung in eine Zwischenstellung, in der der Pflugrahmen (3) zumindest annährend oberhalb der Wendeachse (W) angeordnet ist, zu verbringen wobei der zweite Hydraulikzylinder (5b) außer Wirkverbindung mit dem Drehwerk (2) steht und dann der zweite Hydraulikzylinder (5b) mit dem Drehwerk (2) in Wirkverbindung steht, um den Pflugrahmen (3) aus der Zwischenstellung in die gegenüberliegende Arbeitsstellung abzusenken wobei der erste Hydraulikzylinder (5a) außer Wirkverbindung mit dem Drehwerk (2) steht, und zur Drehung des Pflugrahmens (3) aus der gegenüberliegenden Arbeitsstellung in die Arbeitsstellung umgekehrt zuerst der zweite Hydraulikzylinder (5b) und dann der erste Hydraulikzylinder (5a) mit dem Drehwerk (2) in Wirkverbindung steht, wobei ein Hubweg (H1), um den Pflugrahmen (3) aus der Zwischenstellung in die Arbeitsstellung abzusenken, der Hydraulikzylinder (5a, 5b) hydraulisch gedämpft ist, **dadurch gekennzeichnet, dass** der Aufsatteldrehpflug (1) zumindest einen Bypass (10) umfasst, wobei mittels des Bypasses (10) die Drosselung des Volumenstroms zumindest für einen Hubweg (H2), um den Pflugrahmen (3) aus der Arbeitsstellung in die Zwischenstellung zu verbringen, der Hydraulikzylinder (5a, 5b) überbrückt ist, so dass der Hubweg (H2), um den Pflugrahmen (3) aus der Arbeitsstellung in die Zwischenstellung zu verbringen, ungedämpft ist.

2. Aufsatteldrehpflug (1) nach Anspruch 1, **dadurch gekennzeichnet, dass** der erste Hydraulikzylinder (5a) und der zweite Hydraulikzylinder (5b) jeweils eine Endlagendämpfung (7) umfassen zur Dämpfung des Hubweges (H1) um den Pflugrahmen (3) aus der Zwischenstellung in die Arbeitsstellung abzusenken, wobei der Bypass (10) dazu eingerichtet ist, unter Druck stehendes Hydraulikfluid parallel zu der jeweiligen Endlagendämpfung (7) in zumindest eine Kammer der Hydraulikzylinder (5a, 5b) zu leiten.

3. Aufsatteldrehpflug (1) nach Anspruch 2, **dadurch gekennzeichnet, dass** der erste Hydraulikzylinder (5a) und der zweite Hydraulikzylinder (5b) jeweils einen Bypass (10) umfassen, welcher parallel zu der Endlagendämpfung (7) verschaltet ist, wobei der Bypass (10) jeweils ein Rückschlagventil (11) aufweist.

4. Aufsatteldrehpflug (1) nach Anspruch 3, **dadurch gekennzeichnet, dass** das Rückschlagventil (11) dazu eingerichtet ist den Bypass (10) während des Hubweges (H1), um den Pflugrahmen (3) aus der Zwischenstellung in die Arbeitsstellung abzusenken, zu sperren und den Bypass (10) während des Hubweges (H2), um den Pflugrahmen (3) aus der Arbeitsstellung in die Zwischenstellung zu verbringen, freizugeben.

5. Aufsatteldrehpflug (1) nach Anspruch 2, 3 oder 4, **dadurch gekennzeichnet, dass** die Endlagendämpfung (7) mehrstufig, insbesondere dreistufig, ausgeführt ist.

## Claims

1. Semi-mounted reversible plow (1) comprising a plow frame (3), a horizontal turning axis (W) and a rotating mechanism (2) by means of which the plow frame (3), supporting two rows of plow bodies (4a, 4b) opposite one another, can be rotated about the turning axis (W), the rotating mechanism (2) having at least a first hydraulic cylinder (5a) and a second hydraulic cylinder (5b) for rotating the plow frame (3) about the turning axis (W) into a relevant working position, the hydraulic cylinders (5a, 5b) being arranged on the rotating mechanism (2) in a single-acting manner such that for rotating the plow frame (3) from one working position into the opposite working position, firstly the first hydraulic cylinder (5a) is operatively connected to the rotating mechanism (2), in order to bring the plow frame (3) out of the working position into an intermediate position in which the plow frame (3) is arranged at least approximately above the turning axis (W), the second hydraulic cylinder (5b) not being operatively connected to the rotating mechanism (2), and then the second hydraulic cylinder (5b) being operatively connected to the rotating mechanism (2), in order to lower the plow frame (3) from the intermediate position into the opposite working position, the first hydraulic cylinder (5a) not being operatively connected to the rotating mechanism (2), and for rotating the plow frame (3) in reverse, from the opposite working position into the working position, firstly the second hydraulic cylinder (5b) and then the first hydraulic cylinder (5a) being operatively connected to the rotating mechanism (2), a lifting movement (H1), for lowering the plow frame (3) from the intermediate position into the working position, of the hydraulic cylinder (5a, 5b) being hydraulically damped, **characterized in that** the semi-mounted reversible plow (1) comprises at least one bypass (10), the throttling of the volume flow at least for one lifting movement (H2), for bringing the plow frame (3) out of the working position into the intermediate position, of the hydraulic cylinder (5a, 5b) being bridged by means of the bypass (10), so that the lifting movement (H2) for bringing the plow frame (3) out of the working position into the intermediate position is undamped.

2. Semi-mounted reversible plow (1) according to claim 1,
**characterized in that** the first hydraulic cylinder (5a) and the second hydraulic cylinder (5b) each have an end position damper (7) for damping the lifting movement (H1) for lowering the plow frame (3) from the intermediate position into the working position, the bypass (10) being designed to guide pressurized hydraulic fluid in parallel with the relevant end position damper (7) into at least one chamber of the hydraulic cylinders (5a, 5b).

3. Semi-mounted reversible plow (1) according to claim 2,
**characterized in that** the first hydraulic cylinder (5a) and the second hydraulic cylinder (5b) each comprise a bypass (10) which is connected in parallel with the end position damper (7), the bypass (10) in each case having a check valve (11).

4. Semi-mounted reversible plow (1) according to claim 3,
**characterized in that** the check valve (11) is designed to block the bypass (10) during the lifting movement (H1) for lowering the plow frame (3) from the intermediate position into the working position, and to release the bypass (10) during the lifting movement (H2) for bringing the plow frame (3) out of the working position into the intermediate position.

5. Semi-mounted reversible plow (1) according to claim 2, 3 or 4, **characterized in that** the end position damper (7) is multi-stage, in particular three-stage.

## Revendications

1. Charrue réversible semi-portée (1) comportant un châssis de charrue (3), un axe de retournement (W) horizontal et un mécanisme de rotation (2) au moyen duquel le châssis de charrue (3) portant deux rangées de corps de charrue (4a, 4b) opposées peut être tourné autour de l'axe de retournement (W), dans laquelle le mécanisme de rotation (2) présente, pour la rotation du châssis de charrue (3) autour de l'axe de retournement (W) dans une position de travail respective, au moins un premier vérin hydraulique (5a) et un second vérin hydraulique (5b), dans laquelle les vérins hydrauliques (5a, 5b) sont disposés sur le mécanisme de rotation (2) de manière à avoir un effet simple de telle sorte que, pour la rotation du châssis de charrue (3) d'une position de travail à la position de travail opposée, le premier vérin hydraulique (5a) est d'abord en liaison active avec le mécanisme de rotation (2) afin d'amener le châssis de charrue (3) de la position de travail à une position intermédiaire dans laquelle le châssis de charrue (3) est disposé au moins approximativement au-dessus de l'axe de retournement (W), dans laquelle le second vérin hydraulique (5b) est hors de la liaison active avec le mécanisme de rotation (2) et le second vérin hydraulique (5b) est alors en liaison active avec le mécanisme de rotation (2) afin d'abaisser le châssis de charrue (3) de la position intermédiaire vers la position de travail opposée, dans laquelle le premier vérin hydraulique (5a) est hors de la liaison active avec le mécanisme de rotation (2), et, pour la rotation du châssis de charrue (3) de la position de travail opposée à la position de travail, inversement, d'abord le second vérin hydraulique (5b) et ensuite le premier vérin hydraulique (5a) sont en liaison active avec le mécanisme de rotation (2), dans laquelle une course de levage (H1) des vérins hydrauliques (5a, 5b) pour abaisser le châssis de charrue (3) de la position intermédiaire vers la position de travail est amortie hydrauliquement, **caractérisée en ce que** la charrue réversible semi-portée (1) comprend au moins un moyen de dérivation (10), dans laquelle, au moyen du moyen de dérivation (10), l'étranglement du débit volumétrique au moins pour une course de levage (H2) des vérins hydrauliques (5a, 5b) pour amener le châssis de charrue (3) de la position de travail à la position intermédiaire est contourné, de sorte que la course de levage (H2) pour amener le châssis de charrue (3) de la position de travail à la position intermédiaire est non amortie.

2. Charrue réversible semi-portée (1) selon la revendication 1,
**caractérisée en ce que** le premier vérin hydraulique (5a) et le second vérin hydraulique (5b) comprennent respectivement un moyen d'amortissement de fin de course (7) pour amortir la course de levage (H1) pour abaisser le châssis de charrue (3) de la position intermédiaire vers la position de travail, dans laquelle le moyen de dérivation (10) est conçu pour diriger du fluide hydraulique sous pression parallèlement au moyen d'amortissement de fin de course (7) respectif dans au moins une chambre des vérins hydrauliques (5a, 5b).

3. Charrue réversible semi-portée (1) selon la revendication 2,
**caractérisée en ce que** le premier vérin hydraulique (5a) et le second vérin hydraulique (5b) comprennent respectivement un moyen de dérivation (10) qui est monté en parallèle avec le moyen d'amortissement de fin de course (7), dans laquelle le moyen de dérivation (10) présente respectivement un clapet antiretour (11).

4. Charrue réversible semi-portée (1) selon la revendication 3,
**caractérisée en ce que** le clapet antiretour (11) est conçu pour bloquer le moyen de dérivation (10) pendant la course de levage (H1) pour abaisser le châssis de charrue (3) de la position intermédiaire vers la position de travail, et pour libérer le moyen de dérivation (10) pendant la course de levage (H2) pour amener le châssis de charrue (3) de la position de travail à la position intermédiaire.

5. Charrue réversible semi-portée (1) selon la revendication 2, 3 ou 4, **caractérisée en ce que** le moyen d'amortissement de fin de course (7) est réalisé en plusieurs étages, en particulier en trois étages.
